## Europäisches Patentamt
## European Patent Office
## Office européen des brevets

(19)

(11) Publication number: **0 112 695**
**B1**

(12) **EUROPEAN PATENT SPECIFICATION**

(45) Date of publication of patent specification: **12.08.87**

(21) Application number: **83307643.3**

(22) Date of filing: **15.12.83**

(51) Int. Cl.⁴: **C 25 D 11/22,** C 25 D 11/04, C 25 D 11/12, C 25 D 11/14, C 25 D 11/16, C 25 D 11/18

(54) Method for making a multicoloured member.

(30) Priority: **22.12.82 JP 233931/82**
**22.12.82 JP 233932/82**

(43) Date of publication of application:
**04.07.84 Bulletin 84/27**

(45) Publication of the grant of the patent:
**12.08.87 Bulletin 87/33**

(84) Designated Contracting States:
**CH DE FR GB LI**

(56) References cited:
EP-A-0 014 035
EP-A-0 065 421
DE-A-2 534 248
US-A-3 619 385

PATENT ABSTRACTS OF JAPAN; unexamined applications, C Field, vol. 7, no. 39, February 17, 1983 THE PATENT OFFICE JAPANESE GOVERNMENT page 125 C 151

PATENT ABSTRACTS OF JAPAN, unexamined application, C Field, vol. 6, no. 135, July 22, 1982 THE PATENT OFFICE JAPANESE GOVERNMENT page 126 C 115

(73) Proprietor: **SEIKO INSTRUMENTS & ELECTRONICS LTD.**
**31-1, Kameido 6-chome**
**Koto-ku Tokyo 136 (JP)**

(72) Inventor: **Sano, Yutaka**
**31-1, Kameido, 6-chome**
**Koto-ku Tokyo (JP)**
Inventor: **Suginoya, Mitsuru**
**31-1, Kameido, 6-chome**
**Koto-ku Tokyo (JP)**
Inventor: **Iwasa, Koji**
**31-1, Kameido, 6-chome**
**Koto-ku Tokyo (JP)**
Inventor: **Terada (nee Shinozuka), Yumiko**
**31-1, Kameido, 6-chome**
**Koto-ku Tokyo (JP)**
Inventor: **Kamamori, Hitoshi**
**31-1, Kameido, 6-chome**
**Koto-ku Tokyo (JP)**

(74) Representative: **Miller, Joseph et al**
**J. MILLER & CO. Lincoln House 296-302 High Holborn**
**London WC1V 7JH (GB)**

Courier Press, Leamington Spa, England.

# 0 112 695

(56) References cited:
PATENT ABSTRACTS OF JAPAN, unexamined
applications, C Field, vol. 6, no. 24, February 12,
1982 THE PATENT OFFICE JAPANESE
GOVERNMENT page 111 C 91

PATENT ABSTRACTS OF JAPAN, unexamined
applications, C Field, vol. 5, no. 144, September
11, 1981 THE PATENT OFFICE JAPANESE
GOVERNMENT page 25 C 71

PATENT ABSTRACTS OF JAPAN, unexamined
applications, C Field, vol. 5, no. 24, February 13,
1981 THE PATENT OFFICE JAPANESE
GOVERNMENT page 163 C 43

PATENT ABSTRACTS OF JAPAN, unexamined
applications, C Field, vol. 4, no. 140, October 3,
1980 THE PATENT OFFICE JAPANESE
GOVERNMENT page 112 C 26

Römpps Chemie-Lexikon 7th edition (1973) p.
1003.

## Description

The present invention relates to a method for making a multicoloured member such for example, as a plate, a colour filter, or a display device.

One known method for manufacturing a multi-coloured plate is known as "staining" and includes utilizing surface diffusion of metal ions. Other known methods comprise printing by burning on low melting temperature glass frit, and employing a printing ink containing an organic polymeric binder.

However, these known methods have various drawbacks. For instance, the use of printing to effect colouring has the disadvantage that the colour layer is quite uneven and lacks clarity. The use of staining has the drawback that it involves the use of very high temperatures and that the possible range of colours is restricted, although the surface of the substrate keeps its initial smoothness. In addition these methods have the common drawback that they lack accuracy (e.g. the most that can be achieved is only some hundreds μm of accuracy) and that different colours are mixed together at the boundary therebetween.

It is possible to produce a coloured plate by forming a thin film of aluminium on a base plate, anodically oxidising this thin film, colouring the thin film of anodically oxidized aluminium by the use of organic or inorganic colouring material, and thereafter sealing the porosity on the surface of the anodically oxidized aluminium thin film so as to stabilize the coloured layer. This produces a smooth coloured layer on the plate which is easily fabricated.

However, if this method were to be used to produce a multi-colour plate, it would be necessary to separate different parts of the plate from each other to enable them to be differently coloured. This could, for example, be done by using a photo-resist or by thermal sublimation of a sublimate dye. The use of a photo-resist, however, requires repeated photo-lithography processes and is therefore complicated. On the other hand, the use of thermal sublimation reduces the range of possible colours and makes it very difficult to obtain a fine pattern.

US—A—3,619,385 discloses the provision of a transparent oxide film dissimilar thickness at different film areas so that these areas appear to be differently coloured due to light interference phenomena.

EP—A—0,014,035 discloses the anodic oxidation of an aluminium article so as to provide the article with a corrosion-resistant surface. Such anodic oxidation produces a surface which can be dyed provided it has not been subjected to boiling water, pressurised steam or other de-activating treatment.

Römpps Chemi-Lexikon, 7th Edition (1973), page 1003 discloses that electrolytically oxidised aluminium may be thoroughly and permanently stained with dyes.

None of the three citations referred to above, however, is concerned with a technique for using an anodically oxidised aluminium film so as to produce a multi-coloured member.

According, therefore, to the present invention, there is provided a method of making a multi-coloured member comprising arranging that a surface of the member cannot normally be dyed, treating a portion only of said surface so that it is rendered capable of being dyed, dyeing the said portion a predetermined colour and subjecting the dyed portion to a further treatment which prevents further dyeing thereof, at least one further portion of the surface being subsequently so treated, dyed a different colour, and subjected to the further treatment, characterised by forming a transparent electrode film on the entire surface of a transparent glass substrate and by forming an aluminium film having a uniform thickness on the entire surface of said transparent electrode film, etching said aluminium film and said transparent electrode film identically to form a plurality of separate patterned parts, anodically oxidizing completely a first patterned part of said aluminium film to form said first part into a transparent oxidized aluminium film having a uniform thickness, colouring said transparent oxidized aluminium first part a first colour, sealing the porosity of the surface of said first part, anodically oxidizing completely a second patterned part of said aluminium film to form said second part into a transparent oxidized aluminium film having a uniform thickness, colouring said transparent oxidized aluminium second part a second colour, and sealing the porosity of the surface of said second part.

Preferably, the plurality of separate patterned parts comprises three parts.

The said three parts may be coloured red, green and blue respectively.

The thickness of the said aluminium film may be 1 to 2 μm.

The invention is illustrated merely by way of example in the accompanying drawings, in which:—

Figure 1 shows a known multicolour display device using a colour filter,

Figures 2 and 3 show a multicoloured filter comprising a plurality of strips formed on a transparent glass substrate, and

Figure 4 shows a TN-type liquid crystal display device adapted for use as a multicolour display device.

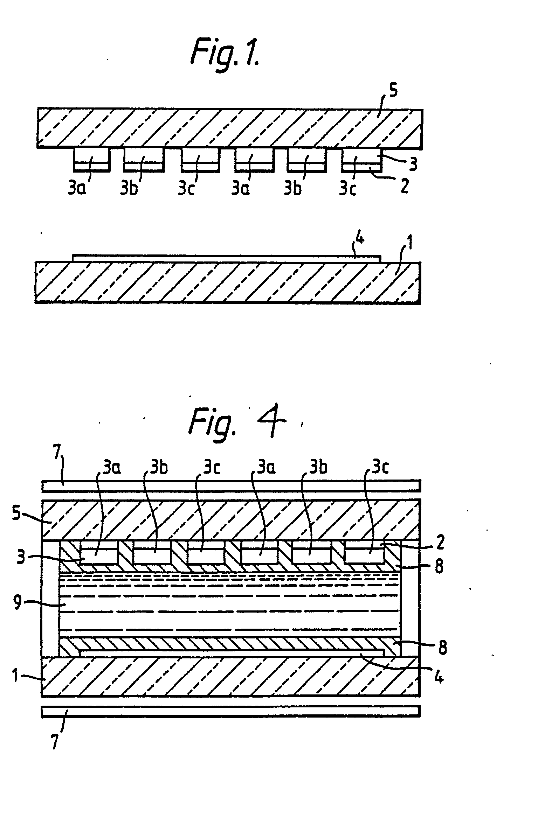

Figure 1 shows an example of a known multi-colour display device or cell using a colour filter. Numeral 1 is a transparent substrate; 2 are transparent electrodes on each of which a desired figure or a letter is pattened; 3 is a colour filter having portions 3a, 3b, 3c each of which is provided with a respective transparent electrode 2; 4 is a second transparent electrode; and 5 is a counter substrate. In a display device of the above construction, a display material (not shown) which acts as an optical shutter, such as liquid crystal material electrochromic material or the like, is sandwiched and held between the transparent substrate 1 and the counter substrate 5. Viewing from the direction of the transparent substrate 1, when the shutter "opens", the colours of the colour filter 3 are displayed, while when the shutter "closes", the colours of the colour filter 3 are masked and are not shown. Accordingly, when the three primary colours are selected for the portions of the colour filter, e.g. by making the portions 3a, 3b, 3c red, green and blue respectively, and the three primary colours are periodically shown repeatedly, a multicolour display can be made on a single cell. Moreover, to display red, only the optical shutter on the red portions 3a "opens" and the optical shutters on the green and blue portions 3b and 3c "close". To display yellow, the optical shutter on the red portions 3a and on the green portions 3b "open", and the optical shutter on the blue portions 3c "closes". In the latter case, yellow is displayed by additive colour mixture. If the colour filter 3 has an appropriate light transparency and the counter substrate 5 is transparent, a similar effect is obtained if a luminous display material is sandwiched and held between the transparent substrate 1 and the counter substrate 5 and viewed from the direction of the counter substrate 5.

As illustrated in Figure 1, it is easy to provide a multicolour display by employing colour filters and such a display can be used for various purposes and has a great effect. However, in manufacturing a multicolour display device with colour filters, it is difficult to make the pattern of the transparent electrodes coincide with the pattern of the colour filters. The more the patterns are reduced in size and are multi-coloured, the more difficult it is to make the patterns coincide.

The colour filters can be formed by means of screen printing, photo-lithography or the like. In the case of screen printing, however, a pattern cannot be made sufficiently fine. That is to say, the more the pattern is multicoloured, the worse is the precision of the printing, and colour shear occurs. In the case of photo-lithography, the pattern can be very small, but manufacture is extremely complicated since a photo-lithography step is needed for each colour change. This is inconsistent with the advantages of colour filters, namely simplicity and capability of providing a multicolour display.

The present invention therefore aims to overcome the above-mentioned drawbacks. It is thus an object of the present invention to provide a method for manufacturing a multi-coloured member having a highly accurate and easily fabricated pattern at low cost.

The method of making a multi-coloured member according to the present invention may be carried out in outline as follows.

Substantially the whole of one surface of a base plate is provided by spattering or vacuum evaporation with a plurality of aluminium films or with a single such film which is subsequently divided into a plurality of films. The aluminium film or films is then dry-etched or chemically etched into a desired plurality of patterns as shown at 3a, 3b, 3c in Figure 1. Next a part of the so-formed plurality of patterns is selectively connected to the terminal of a power source (not shown) so as to anodically oxidize the part in an anodically oxidizing bath.

Consequently, the part which is selectively connected to the power source is changed to an oxidized aluminium film. This oxidized aluminium film has quite considerable transparency for visible rays. This oxidized aluminium film is also capable of being coloured by various methods. Therefore, it is possible to colour only the oxidized aluminium film, while the other aluminium films, or the rest of the single aluminium film, is left uncoloured. Thus a method for easily manufacturing multi-coloured film is obtained by repeating these selective oxidation processes and colouring processes. This method does not involve any complicated processes such as are employed in a photo-resist method. This method also does not suffer from the drawback which exists when a sublimate dye is used, namely that it is very hard to obtain a very fine pattern. By the use of the method of the present invention, a multicoloured plate having high accuracy can easily be obtained regardless of the shades of colour employed and the fineness of the pattern.

A process for making a multi-coloured filter according to the present invention is described in outline hereinbelow.

The present invention involves the anodic oxidation of aluminium. Thus an Al film is coated over the whole surface of a transparent electrode ($SnO_2$, ITO or the like) by spattering, vacuum evaporation or the like. The Al film and the transparent electrode may then be dry etched or chemically etched into a desired pattern, e.g. in strips. Thus strips of transparent electrodes and strips of Al film may completely overlap each other. A patterned transparent electrode and its Al film may be selected as desired and conneced so as to be oxidized anodically in an anodic oxidation bath. Then, only the Al film connected to the electrode will be changed to an aluminium oxide film. Aluminium oxide has extremely high transparency with respect to the viewed light and can be coloured by various methods. Therefore, only the aluminium oxide film made by such selective anodic oxidation of the Al film will be coloured and the portions which are not anodically oxidized can be left uncoloured. Thus, by repeating the processes of selective anodic oxidation and colouration of the Al film on the transparent electrode, a multicolour filter with fine patterns, and without colour shear is easily formed at low cost.

The present invention will now be described in detail in conjunction with preferred embodiments.

Embodiment I
Method for manufacturing a multi-coloured filter
The first process: Forming a transparent electrode.

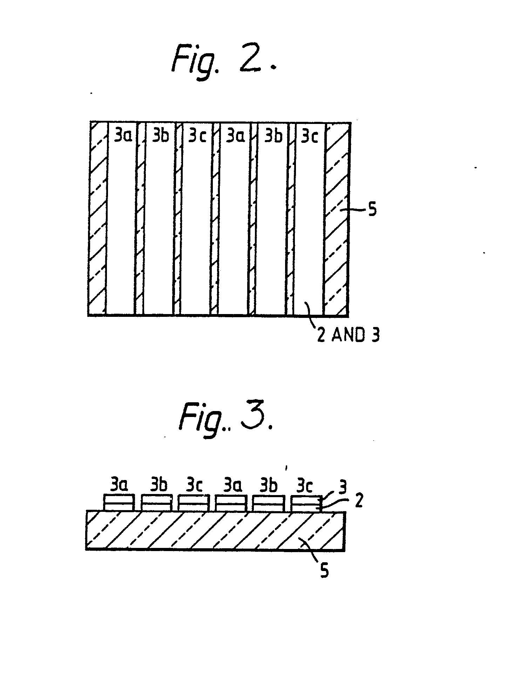

A transparent electrode film 2 made of tin dioxide or indium tin oxide is first formed on the entire surface of a transparent glass substrate 5 (Figures 2 and 3).

The second process: Forming aluminium film.

An aluminium film 3 is formed on the transparent electrode film 2 to a thickness of 1 to 2 µm by spattering. The aluminium film 3 covers the entire surface of the transparent electrode film 2.

The third process: Etching a pattern.

As shown in Figures 2 and 3, the aluminium film 3 and the transparent electrode film 2 are simultaneously identically etched by dry-etching or chemical etching to form a strip pattern. The width of a single strip is 50 µm. The distance between two adjacent strips is 20 µm.

The fourth process: Anodic oxidation.

It is assumed that the strips 3a are coloured red, the strips 3b are coloured green and the strips 3c are coloured blue. Then the first strips to be coloured are assumed to be the strips 3a. Only the strips 3a are first selected for anodic oxidation, the transparent electrode and the aluminium film of the strips 3a being connected to the electrode of a power source (not shown). The filter is totally immersed in a 15 weight % sulphuric acid aqueous solution bath together with a platinum plate having a larger surface than the strip surface of the aluminium film, the platinum plate serving as a cathode. The aluminium strips 3a are anodically oxidized by applying a constant voltage ranging between +4.0 volts and +5.0 volts at room temperature. All of the aluminium film on the strips 3a is changed to a transparent oxidized aluminium film. It takes about 30 minutes or 60 minutes depending on the thickness of the aluminium film to finish the anodic oxidation and to change the aluminium film on the strips 3a to a transparent oxidized aluminium film. Thus the strips 3a alone become transparent while other strips 3b and 3c are left as opaque parts of the aluminium film.

The fifth process: Colouring the strips 3a red.

Next the transparent glass substrate 5 on which the selectively oxidized aluminium film of the strips 3a is provided is totally immersed in an acid bath containing the red acid dye Alizarine Rubinol 3G for several minutes so that the transparent oxidized aluminium film formed on the surface of the strips 3a is coloured red.

The sixth process: Porosity-sealing treatment.

The porosity on the oxidized aluminium film which is coloured red is sealed by subjecting the same to steam.

The seventh process: Colouring the strips 3b green.

By repeating the same processes as in the fourth, fifth and sixth processes, the aluminium film of the strip 3b is selectively anodically oxidized to be changed to a transparent oxidized aluminium film, which is immersed in an acid bath containing the green dye Aluminium Green GLW, and therefore is coloured green. After this the aluminium film which is coloured green is subjected to a porosity-sealing treatment.

The eighth process: Colouring the strips 3c blue.

By repeating the same processes as in the fourth, fifth and sixth processes, and in the same way as in the seventh process, the aluminium film of the strips 3c is selectively anodically oxidized to be changed to a transparent oxidized aluminium film, which is immersed in an acid bath containing the blue acid dye Aluminium Blue LLW, and therefore is coloured blue. After this the aluminium film which is coloured blue is subjected to a porosity-sealing treatment. Thus a colour filter having red, green and blue strips is produced.

Next a method for manufacturing a multi-coloured display device utilizing the multi-coloured filter will be described.

Embodiment II

Method for manufacturing a multicolour display device using liquid crystal material.

The first process: Forming an Al film.

An Al film of 1—2 µm thickness is formed over the whole surface of the transparent electrode 2 ($SnO_2$, ITO or the like) on the transparent glass substrate 5 (Figure 4) by spattering. The Al film may alternatively be formed by vacuum evaporation.

The second process: Pattern etching.

As shown in Figure 2, the Al film and the transparent electrode are dry etched or chemically etched into a strip pattern whose strips are 50 µm wide and spaced from each other by 20 µm.

The third process: Anodic oxidation

The strips 3a, 3b and 3c (Figure 4) are respectively coloured red, green and blue. If the colour to be initially coloured is red, for example, only the strips 3a are selected, and the transparent electrode and the Al film of the strips 3a are connected to the electrode of a power source (not shown). Then the anodic oxidation is carried out in a 15 weight % sulphuric acid solution using a Pt plate as a cathode having an area equivalent to or more than the anode Al film at room temperature and at a constant voltage of +4.0 volts to +5.0 volts, whereby the Al film on the transparent electrode becomes a transparent aluminium oxide film. The time taken to complete the anodic oxidation and change the Al film on the transparent electrode to a transparent oxide aluminium film is about 30—60 minutes though the time differs according to the thickness of the Al film. Thus, only the strips 3a are transparent, and the strips 3b and 3c are left as opaque Al films. Instead of the sulphuric acid bath, a chromic acid anhydride bath, an oxalic acid bath, a phosphoric acid bath or the like can be used as the anodic oxidation bath.

The fourth process: Colouration of the strips 3a red.

The transparent glass substrate which carries the Al film of the strips 3a thereon which have

been selectively anodically oxidized, is immersed in an acid bath of the red acid dye Alizarine Rubinol 3G for several minutes. As a result, the transparent aluminium oxide film formed on the surface of the strips 3a is coloured red. Since the Al film on the strips 3b and 3c is not oxidized, the strips 3b and 3c are not coloured in this process.

The fifth process: Porosity-sealing treatment.

The porosity of the anodic oxidation film of the red strips 3a is sealed in steam. The anodic oxidation film after colouration and porosity-sealing treatment is less easily bleached and cannot subsequently be another colour even after the Al film of the strips 3b and 3c are anodically oxidized and then coloured in the following processes. Further, the porosity-sealing treatment improves the chemical resistance, heat resistance, and light resistance of the filter, and the reliability in manufacturing the display device is also enhanced. In addition to using steam for the porosity-sealing treatment, satisfactory results can also be obtained by using sodium nickel acetate and boiling water for effecting porosity sealing.

The sixth process: Colouring the strips 3b green.

Operations corresponding to those of the third, fourth and fifth processes of this embodiment are repeated and only the Al film of the strips 3b is selectively anodically oxidized to form a transparent aluminium oxide film. The transparent aluminium oxide film is immersed in an acid bath of the green acid dye Aluminium Green GLW so as to become coloured green, and then the porosity-sealing treatment is carried out.

The seventh process: Colouring the strips 3c blue.

Operations corresponding to those of the third, fourth and fifth processes of this embodiment are repeated and only the Al film of the strips 3c is selectively anodically oxidized to form a transparent aluminium oxide film. The transparent aluminium oxide film is totally immersed in an acid bath of the blue acid dye Aluminium Blue LLW so as to become coloured blue and then the porosities are sealed. Thus strip colour filters of red, green and blue are formed. For colouration of the strips as in fourth, sixth and seventh processes of this embodiment, various acid dyes (referred to in the "Dye Manual", published by Maruzen) can be used besides the above-mentioned acid dyes, and inorganic dyes can also be used. An excellent colouration can also be effected by using a chloroform solution of the solvent dye Sumiplast Turquoise Blue B or Sumiplast Red FB.

The eighth process; Forming an alignment film.

Alignment films 8 (Figure 4) which are aligned with liquid crystal material 9, are formed by oblique evaporation of, for example, SiO on the strip colour filter of red, green and blue formed by means of the above processes and on the second electrode 4.

The ninth process: Assembling the liquid crystal display device.

A TN-type liquid crystal display device which can easily display multicolour or full colour is completed as shown in Figure 4 by holding a nematic liquid crystal layer 9 between the colour filter and the second transparent electrode 4 on which an alignment film 8 is formed. The liquid crystal display device is characterized in that the transparent electrodes 2 of the anodically oxidized Al film of the strips 3a, 3b and 3c respectively are used as driving electrodes for the liquid crystal display device. Moreover, the strips 3a 3b and 3c of the completed colour filter respectively overlie the transparent electrodes 2 which act as driving electrodes. Instead of the TN-type display, use may also be made of a diochroic colour pigment dissolved in G—H type material or DSM nematic liquid crystal material.

## Claims

1. A method of making a multicoloured member comprising arranging that a surface of the member cannot normally be dyed, treating a portion only (e.g. 3a) of the said surface so that it is rendered capable of being dyed, dyeing the said portion (3a) a predetermined colour and subjecting the dyed portion to a further treatment which prevents further dyeing thereof, at least one further portion (e.g. 3b) of the surface being subsequently so treated, dyed a different colour, and subjected to the further treatment, characterised by forming a transparent electrode film (2) on the entire surface of a transparent glass substrate (5) and by forming an aluminium film (3) having a uniform thickness on the entire surface of said transparent electrode film (2), etching said aluminium film (3) and said transparent electrode film (2) identically to form a plurality of separate patterned parts, anodically oxidizing completely a first patterned part (3a) of said aluminium film (3) to form said first part (3a) into a transparent oxidized aluminium film having a uniform thickness, colouring said transparent oxidized aluminium first part (3a) a first colour, sealing the porosity of the surface of said first part (3a), anodically oxidizing completely a second patterned part (3b) of said aluminium film (3) to form said second part (3b) into a transparent oxidized aluminium film having a uniform thickness, colouring said transparent oxidized aluminium second part (3b) a second colour, and sealing the porosity of the surface of said second part (3b).

2. A method as claimed in claim 1 characterised in that said plurality of separate patterned parts comprises three parts (3a, 3b, 3c).

3. A method as claimed in claim 2 characterised in that the said three parts (3a, 3b, 3c) are coloured red, green and blue respectively.

4. A method as claimed in any preceding claim characterised in that the thickness of the said aluminium film (3) is 1 to 2 μm.

**Patentansprüche**

1. Verfahren zum Herstellen eines mehrfarbigen Elementes, bei dem man vorsieht, daß eine Fläche des Elementes normalerweise nicht gefärbt werden kann, nur einen Teil (z.B. 3a) der Fläche so behandelt, daß sie gefärbt werden kann, diesen Teil (3a) mit einer bestimmten Farbe färbt und den gefärbten Teil einer weiteren Behandlung unterzieht, die ein weiteres Färben des Teiles verhindert, anschließen einen weiterern Teil (z.B. 3b) der Fläche derart behandelt, mit einer anderen Farbe färbt und danach der weiteren Behandlung unterzieht, dadurch gekennzeichnet, daß man eine transparente Elektrodenfilmschicht (2) auf der gesamten Oberfläche eines transparenten Glassubstrates (5) vorsieht und eine Aluminiumfilmschicht (3) mit einer gleichförmigen Dicke auf der gesamten Oberfläche der transparenten Elektrodenfilmschicht (2) ausbildet, die Aluminiumfilmschicht (3) und die transparente Elektrodenfilmschicht (2) identisch ätzt, um eine Vielzahl von unterschiedlich gemusterten Teilen auszubilden, anodisch vollständig ein erstes gemustertes Teil (3a) der Aluminiumfilmschicht (3) oxidiert, um den ersten Teil (3a) zu einer transparenten oxidierten Aluminiumfilmschicht mit einer gleichförmigen Dicke auszubilden, den die transparente oxidierte Aluminiumfilmschicht umfassenden ersten Teil (3a) mit einer ersten Farbe färbt, die Porosität der Oberfläche des ersten Teiles (3a) versiegelt, anodisch vollständig ein zweites gemustertes Teil (3b) der Aluminiumfilmschicht (3) oxidiert, um den zweiten Teil (3b) zu einer transparenten oxidierten Aluminiumfilmschicht mit einer gleichförmigen Dicke auzubilden, den die transparente oxidierende Aluminiumfilmschicht umfassenden zweiten Teil (3b) mit einer zweiten Farbe färbt und die Porosität der Oberfläche des zweiten Teiles (3b) versiegelt.

2. Verfahren nach Anspruch 1, dadurch gekennzeichnet, daß die Vielzahl von unterschiedlich gemusterten Teilen drei Teile (3a, 3b, 3c) umfaßt.

3. Verfahren nach Anspruch 2, dadurch gekennzeichnet, daß die drei Teile (3a, 3b, 3c) rot, grün bzw. blau gefärbt sind.

4. Verfahren nach einem der vorhergehenden Ansprüche, dadurch gekennzeichnet, daß die Dicke der Aluminiumfilmschicht (3) 1 bis 2 µm beträgt.

**Revendications**

1. Un procédé de fabrication d'un élément multicolore comprenant l'arrangement pour qu'une surface de l'élément ne puisse pas être normalement teinte, le traitement d'une portion seulement (par exemple 3a) de cette surface pour la rendre apte à être teinte, la teinture de cette portion (3a) dans une couleur prédéterminée et la soumission de la portion teinte à un autre traitement qui l'empêche d'être teinte à nouveau, au moins une autre portion (par exemple 3b) de la surface étant subséquemment soumise à ce traitement, teinte dans une couleur différente, et soumise à cet autre traitement, ledit procédé étant caractérisé en ce que l'on forme un film d'électrode transparent (2) sur la surface entière d'un substrat de verre transparent (5) et on forme un film d'aluminium (3) ayant une épaisseur uniforme sur la surface entière de ce film d'électrode transparent (2), on grave ce film d'aluminium (3) et ce film d'électrode transparent (2) identiquement pour former plusieurs portions séparées portant le dessin, on oxyde anodiquement et complètement une première portion portant le dessin (3a) de ce film d'aluminium (3) pour transformer cette première portion (3a) en un film d'aluminium oxidé transparent ayant une épaisseur uniforme, on colore cette première portion (3a) de film d'aluminium oxidé transparent dans une première couleur, on scelle la porosité de la surface de cette première portion (3a), on oxyde anodiquement et complètement une seconde portion portant le dessin (3b) de ce film d'aluminium (3) pour transformer cette seconde portion (3b) en un film d'aluminium oxidé transparent ayant une épaisseur uniforme, on colore cette seconde portion d'aluminium oxidé transparent (3b) dans une seconde couleur, et on scelle la porosité de la surface de cette seconde partie (3b).

2. Un procédé selon la revendication 1, caractérisé en ce que cette pluralité de portions séparées portant le dessin comprend trois portions (3a, 3b, 3c).

3. Un procédé selon la revendication 2, caractérisé en ce que les trois portions (3a, 3b, 3c) sont colorées en rouge, vert et bleu respectivement.

4. Un procédé selon l'une quelconque des revendications précédentes, caractérisé en ce que l'épaisseur du film d'aluminium (3) est de 1 à 2 µm.

## Fig.1.

5

3
3a  3b  3c  3a  3b  3c  2

4  1

## Fig. 4

7  3a  3b  3c  3a  3b  3c

5

3  2
8

9

8
1  4

7

# Fig. 2.

3a | 3b | 3c | 3a | 3b | 3c

5

2 AND 3

# Fig. 3.

3a | 3b | 3c | 3a | 3b | 3c

3
2

5